# EUROPEAN PATENT SPECIFICATION

(11) **EP 3 289 749 B1**
(45) Date of publication and mention of the grant of the patent: **23.09.2020**
(21) Application number: 15723157.2
(22) Date of filing: 29.04.2015
(51) Int. Cl.: H04L 29/06, H04W 12/04, H04W 4/14, H04W 12/00

(54) **METHOD AND APPARATUS FOR ENABLING SHARING OF AN ASSET**
VERFAHREN UND VORRICHTUNG ZUR ERMÖGLICHUNG DER GEMEINSAMEN NUTZUNG EINES ASSETS
PROCÉDÉ ET APPAREIL POUR PERMETTRE LE PARTAGE D'UN ACTIF

(43) Date of publication of application: 07.03.2018
(73) Proprietor: Telefonaktiebolaget LM Ericsson (publ), 164 83 Stockholm (SE)
(72) Inventor: KÖLHI, Johan, S-16480 Stockholm (SE); SKOG, Robert, S-16480 Stockholm (SE); HUBER, Michael, S-16480 Stockholm (SE)
(74) Representative: Brann AB
(86) International application number: PCT/EP2015/059383
(87) International publication number: WO 2016/173647

(56) References cited:
- WO-A1-2004/043037
- WO-A1-2013/160525
- US-A1- 2014 066 013
- US-A1- 2015 067 327

## Description

### Technical Field

The present invention relates to methods for enabling sharing of an asset by an authorised User Equipment device (UE) with other authorised UEs, the asset comprising at least one of content or functionality on the sharing UE. The present invention also relates to a server and UEs for enabling sharing of an asset. The present invention also relates to a computer program configured to carry out methods for enabling sharing of an asset by an authorised UE.

### Background

Content stored on a User Equipment device (UE) may be shared with other UEs via a communication network. Such content may include media content such as music, picture and video files, which users may share between devices via a cellular communication network. In some situations, content may be shared between devices in a more direct manner, using Bluetooth, exchange of storage material or Wi-Fi direct; enabling content to be transferred directly from one UE to another without requiring high capacity connectivity to a communication network. The ability to share content directly between UEs places a lesser burden upon communication network bandwidth, and may be particularly advantageous in regions in which the existing communication network architecture is unable to provide the bandwidth required for large scale internet distribution of media content from a centralised source. PCT/EP2014/077262 discloses a method in which distribution of media content via direct peer-to-peer sharing is enabled, with the authorisation to access shared content being obtained from a centralised server via a communication protocol that places a very limited demand upon communication network bandwidth.

Functionality may also be shared between UEs, enabling a UE to benefit from functionality available on another UE within close proximity. However, in order to benefit from content or functionality sharing, it is necessary to find and connect to available UEs in order to locate a UE having the required content or functionality. Finding a device having the required content or functionality may therefore take some time, and the pool of UEs between which sharing may take place is limited, as owners of UEs will generally only connect to the devices of those they already know, including friends, family, colleagues and other acquaintances. Having found a suitable UE for sharing, the process of accessing the shared functionality or content also requires the cooperation of users of the two UEs.

WO2013/160525 describes a method for controlling access to wireless network access parameters, comprising: providing, by an apparatus to a second apparatus, credentials for accessing to a wireless network, detecting, by the apparatus, an identity of a third apparatus, and sending, by the apparatus, a message to the second apparatus to allow to deliver the credentials to the third apparatus.

US 2014/066013 describes a system for sharing network resources within a managed network, the system arranged to receive network operator-approved credentials associated with a first communications device. Pre-assigned network resources are accessible by the first communications device by way of the network operator-approved credentials. The system is further arranged to replicate the network operator-approved credentials, and receiving a request from a second communications device for access to the pre-assigned network resources of the first communications device. A copy of the replicated network operator-approved credentials is forwarded to enable the second mobile device to access the pre-assigned network resources.

### Summary

It is an aim of the present invention to provide a method according to claim 1 and a server according to claim 15 which at least partially address one or more of the challenges discussed above.

According to a first aspect of the present invention, there is provided a method for enabling sharing of an asset by an authorised User Equipment device, UE, with other authorised UEs, the asset comprising at least one of content or functionality on the sharing UE. The method comprises receiving, from the sharing UE, credentials for connection to the sharing UE over a peer to peer communication protocol. The method further comprises encrypting the received credentials using an encryption key corresponding to a decryption key available to authorised UEs, and facilitating distribution of the encrypted credentials to at least one other authorised UE.

According to examples of the invention, the method may take place in a server, which may be a physical server or may be a virtual server, for example hosted on a cloud computing platform. The server may in some examples correspond to an application for asset sharing which may be installed on authorised UEs.

According to examples of the invention, receiving credentials from a sharing UE may comprise receiving a message such as a Short Message Service (SMS) message or an Internet Protocol (IP) message from the sharing UE.

According to examples of the invention, the peer to peer communication protocol may be Wi-Fi Direct, local Wi-Fi or Bluetooth, and the credentials may for example be the Service Set ID (SSID) and password or network key of the sharing UE.

According to examples of the invention, an authorised UE may comprise a UE having an asset sharing application installed on the device. In some examples, the decryption key available to authorised UEs may be a decryption key that is stored in the asset sharing application which may be installed on authorised UEs.

According to examples of the invention, facilitating distribution of the encrypted credentials to at least one other authorised UE may comprise sending the encrypted credentials to an authorised UE in a message. The authorised UE to which the encrypted credentials may be sent may be the at least one other authorised UE or may be the sharing UE.

According to examples of the invention, the message may comprise one of a Short Message Service, SMS, message or an Internet Protocol, IP, message.

According to examples of the invention, sending the encrypted credentials in a message may comprise sending the encrypted credentials to the at least one other authorised UE.

According to examples of the invention, the method may further comprise sending an acknowledgement of receipt of the credentials to the sharing UE, for example if the encrypted credentials are sent to the at least one other authorised UE rather than returned to the sharing UE.

According to examples of the invention, sending the encrypted credentials in a message may comprise sending the encrypted credentials to the sharing authorised UE.

According to examples of the invention, the encrypted credentials may be sent to the sharing UE for broadcast by the sharing UE, which broadcast may be received by neighbouring UEs, including any neighbouring authorised UEs. Only neighbouring authorised UEs may have access to a decryption key, for example stored in an asset sharing application, to enable decryption of the credentials and connection to the sharing UE.

According to examples of the invention, the method may further comprise storing the received credentials in a database.

According to examples of the invention, the method may further comprise receiving an indication of a location of the sharing UE, and storing the indicated location in the database with the credentials.

According to examples of the invention, the indication of location may be an identification of a communication network cell in which the sharing UE is located. Alternatively, the indication of location may be coordinates received from the sharing UE, for example if the UE has GPS capability. Alternatively, the indication of location may be received from one or more base stations in the vicinity of the sharing UE, for example enabling triangulation of the sharing UE.

According to examples of the invention, the method may further comprise receiving an indication of the asset to be shared.

According to examples of the invention, the indication may be an indication of particular content that is available at the sharing UE or may be an indication of functionality, for example indicating that Internet connectivity is available at the sharing UE for access by other authorised UEs.

According to examples of the invention, the method may further comprise storing the received indication of the asset with the credentials. Receiving and storing an indication of the asset to be shared at the sharing UE may enable the server or other apparatus conducting a method according to an aspect of the present invention to provide credentials for accessing a specific asset. Thus if an authorised UE seeks a particular asset to share, the server or other apparatus conducting the method may provide the relevant credentials for accessing another authorised UE which has that particular asset available for sharing. In this manner, access to specific assets is facilitated, as a user has no need to connect to a sharing UE to discover what assets they have available for sharing, but may simply receive credentials for a suitable sharing UE in response to a request for a particular asset.

According to examples of the invention, the method may further comprise receiving a request from an authorised UE for an asset, retrieving from the database the credentials of a sharing UE having the requested asset, and sending the encrypted retrieved credentials to the requesting UE in a message. The message may for example be an SMS or IP message.

According to examples of the invention, the method may further comprise receiving an indication of a location of the requesting UE, wherein retrieving from the database the credentials of a sharing UE having the requested asset comprises retrieving from the database the credentials of a sharing UE having the requested asset and having a stored indicated location within a threshold distance of the indicated location of the requesting UE.

According to examples of the invention, the threshold distance may comprise the extent of a communication network cell, such that devices within the same or neighbouring cells are considered to be located within the threshold distance. The threshold distance may alternatively be a radius measured from the requesting UE. In some examples, the threshold distance may be adjusted as a function of the number of sharing UEs having the requested asset.

According to examples of the invention, the method may further comprise storing the requested asset with an identification of the requesting UE in a database.

According to examples of the invention, the asset may comprise functionality on the sharing UE, and the functionality may comprise connectivity with a communication network, which may for example be the Internet. According to further examples, the asset may comprise content stored on the sharing UE, which content may be media content such as video extracts, movies, audio files, picture files etc.

According to another aspect of the present invention, there is provided a method, performed in an authorised user equipment device, UE, for accessing an asset shared by another authorised UE, the asset comprising at least one of content or functionality on the sharing UE. The method comprises receiving encrypted credentials for connecting to the sharing UE over a peer to peer connection protocol and decrypting the received encrypted credentials. The method further comprises connecting to the sharing UE using the decrypted credentials and accessing the asset.

According to examples of the invention, an authorised UE may comprise a UE having an asset sharing application installed on the device. According to examples of the invention, the received credentials may be decrypted using a decryption key that is stored in the asset sharing application which may be installed on authorised UEs.

According to examples of the invention, decrypting the received encrypted credentials may comprise retrieving a decryption key from a memory.

According to examples of the invention, the method may further comprise disconnecting from the sharing UE and discarding the received encrypted credentials.

According to examples of the invention, receiving encrypted credentials may comprise receiving a broadcast from the sharing UE containing the encrypted credentials, the broadcast indicating that an asset is available to authorised UEs for sharing.

According to examples of the invention, the method may further comprise requesting credentials for accessing an indicated asset from a server. The server may be an application server, for example an application server corresponding to an asset sharing application installed on authorised UEs.

According to examples of the invention, the method may further comprise providing an indication of a location of the authorised UE to the server.

According to examples of the invention, receiving encrypted credentials may comprise receiving the encrypted credentials in a message from a server. The message may for example be an SMS or IP message.

According to examples of the invention, accessing the asset may comprise at least one of downloading content from the sharing UE or using functionality available at the sharing UE.

According to examples of the invention, using functionality at the UE may comprise connecting to a communication network via the sharing UE. The communication network may for example be the Internet.

According to another aspect of the present invention, there is provided a method, performed in an authorised user equipment device, UE, for sharing an asset with another authorised UE, the asset comprising at least one of content or functionality on a sharing UE. The method comprises identifying an asset on the authorised UE for sharing with other authorised UEs and sending to a server credentials for connection to the authorised UE over a peer to peer communication protocol.

According to examples of the invention, the server may be an application server, for example an application server corresponding to an asset sharing application which may be installed on authorised UEs. According to examples of the invention, sending credentials may comprise sending a message such as a Short Message Service (SMS) message or an Internet Protocol (IP) message from the sharing UE.

According to examples of the invention, the peer to peer communication protocol may be Wi-Fi Direct, local Wi-Fi or Bluetooth, and the credentials may for example be the Service Set ID (SSID) and password or network key of the sharing UE.

According to examples of the invention, identifying an asset may comprise marking content for sharing, for example by placing content in a sharing folder or adding the content to a list within an asset sharing application etc. According to further examples of the invention, identifying an asset may comprise establishing that particular functionality is available on the authorised UE, for example establishing that Wireless Internet Connectivity is operational on the UE.

According to examples of the invention, an authorised UE may comprise a UE having an asset sharing application installed on the device.

According to examples of the invention, the method may further comprise receiving an encrypted version of the connection credentials from the server in a message.

According to examples of the invention, the connection credentials may be encrypted using an encryption key corresponding to a decryption key available to authorised devices. According to examples of the invention, the decryption key available to authorised UEs may be a decryption key that is stored in the asset sharing application which may be installed on authorised UEs.

According to examples of the invention, the message may comprise one of a Short Message Service, SMS, message or an Internet Protocol, IP, message.

According to examples of the invention, the method may further comprise broadcasting the received encrypted credentials.

According to examples of the invention, the broadcast may be received by neighbouring UEs, including any neighbouring authorised UEs. Neighbouring authorised UEs will have access to the necessary decryption key (for example stored in an asset sharing application) to enable decryption of the credentials and connection to the sharing UE.

According to examples of the invention, the method may further comprise sending an indication of a location of the authorised UE to the server.

According to examples of the invention, the indication of location may be an identification of the communication network cell in which the authorised UE is located. Alternatively, the authorised UE may send coordinates, for example if the UE has GPS capability.

According to examples of the invention, the method may further comprise sending an indication of the asset to be shared to the server.

According to examples of the invention, the indication may be an indication of particular content that is available or may be an indication of functionality, for example indicating that Internet connectivity is available at the authorised UE for access by other authorised UEs.

According to examples of the invention, the asset may comprise functionality on the sharing UE, and the functionality may comprise connectivity with a communication network.

According to examples of the invention, the communication network may for example be the Internet. According to further examples of the invention, the asset may be content stored on the sharing UE, which content may be media content such as video extracts, movies, audio files, picture files etc.

According to another aspect of the present invention, there is provided a server for enabling sharing of an asset by an authorised User Equipment device, UE, with other authorised UEs, the asset comprising at least one of content or functionality on the sharing UE. The server comprises a processor and a memory, the memory containing instructions executable by the processor such that the server is operable to receive, from the sharing UE, credentials for connection to the sharing UE over a peer to peer communication protocol, encrypt the received credentials using an encryption key corresponding to a decryption key available to authorised UEs, and facilitate distribution of the encrypted credentials to at least one other authorised UE.

According to another aspect of the present invention, there is provided a user equipment device, UE, for accessing an asset shared by another authorised UE, the asset comprising at least one of content or functionality on the sharing UE. The UE comprises a processor and a memory, the memory containing instructions executable by the processor such that the UE is operable to receive encrypted credentials for connecting to the sharing UE over a peer to peer connection protocol, decrypt the received encrypted credentials, connect to the sharing UE using the decrypted credentials, and access the asset.

According to another aspect of the present invention, there is provided a user equipment device, UE, for sharing an asset with another authorised UE, the asset comprising at least one of content or functionality on a sharing UE. The UE comprises a processor and a memory, the memory containing instructions executable by the processor such that the UE is operable to identify an asset on the authorised UE for sharing with other authorised UEs, and send to a server credentials for connection to the authorised UE over a peer to peer communication protocol.

According to another aspect of the present invention, there is provided a server for enabling sharing of an asset by an authorised User Equipment device, UE, with other authorised UEs, the asset comprising at least one of content or functionality on the sharing UE. The server comprises a receiving unit for receiving, from the sharing UE, credentials for connection to the sharing UE over a peer to peer communication protocol,l and an encryption unit for encrypting the received credentials using an encryption key corresponding to a decryption key available to authorised UEs. The server also comprises a distribution unit for facilitating distribution of the encrypted credentials to at least one other authorised UE.

According to another aspect of the present invention, there is provided a User Equipment device, UE, for accessing an asset shared by another authorised UE, the asset comprising at least one of content or functionality on the sharing UE. The UE comprises a receiving unit for receiving encrypted credentials for connecting to the sharing UE over a peer to peer connection protocol and a decryption unit for decrypting the received encrypted credentials. The UE also comprises a connection unit for connecting to the sharing UE using the decrypted credentials and an asset unit for accessing the asset.

According to another aspect of the present invention, there is provided a User Equipment device, UE, for sharing an asset with another authorised UE, the asset comprising at least one of content or functionality on a sharing UE. The UE comprises an asset unit for identifying an asset on the authorised UE for sharing with other authorised UEs, and a transmitting unit for sending to a server credentials for connection to the authorised UE over a peer to peer communication protocol.

### Brief description of the drawings

For a better understanding of the present invention, and to show more clearly how it may be carried into effect, reference will now be made, by way of example, to the following drawings in which:
Figure 1 is a flow chart illustrating process steps in a method for enabling sharing of an asset by an authorised UE;
Figure 2 is a flow chart illustrating process steps in a method for accessing an asset shared by an authorised UE;
Figure 3 is a flow chart illustrating process steps in a method for sharing an asset with an authorised UE;
Figure 4 is a flow chart illustrating process steps in another method for enabling sharing of an asset by an authorised UE;
Figure 5 is a flow chart illustrating process steps in another method for accessing an asset shared by an authorised UE;
Figure 6 is a flow chart illustrating process steps in another method for sharing an asset with an authorised UE;
Figure 7 is an illustration of content sharing between two authorised UEs;
Figure 8 is a block diagram illustrating functional units in a server;
Figure 9 is a block diagram illustrating functional units in a UE;
Figure 10 is a block diagram illustrating functional units in another example of a server;
Figure 11 is a block diagram illustrating functional units in another examples of a UE; and
Figure 12 is a block diagram illustrating functional units in another example of a UE.

### Detailed Description

Aspects of the present invention provide methods enabling sharing of an asset between authorised devices. The asset may be content, including media content such as images, audio or video files, or may be functionality, such as Internet connectivity. Authorised UEs may be UEs having an asset sharing application installed on the devices. In this manner, a community of authorised UEs may be established, with each community member having the same asset sharing application installed on their device. In some examples of the present invention, several of the methods described herein for enabling asset sharing between authorised UEs may run within such an asset sharing application. Examples of the methods for enabling asset sharing may substantially automate the process of locating a UE having a required asset and accessing the asset on the located UE.

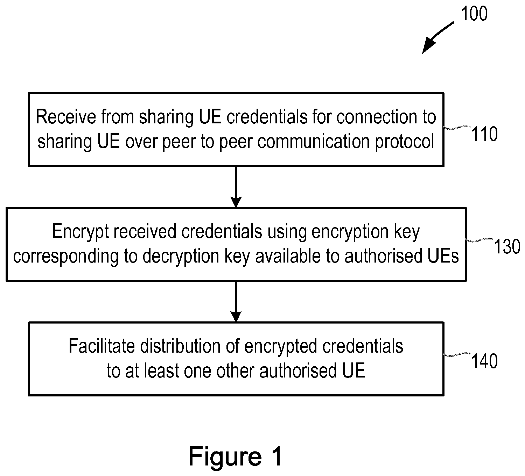

Figure 1 illustrates process steps in a method 100 for enabling sharing of an asset by an authorised UE with other authorised UEs, the asset comprising at least one of content or functionality on the sharing UE. In a first step 110, the method comprises receiving, from the sharing UE, credentials for connection to the sharing UE over a peer to peer communication protocol. The method then comprises, in step 130, encrypting the received credentials using an encryption key corresponding to a decryption key available to authorised UEs. Finally, the method comprises, at step 140, facilitating distribution of the encrypted credentials to at least one other authorised UE.

The method 100 may for example take place in a server, which may be a physical server or may be a virtual server, for example hosted on a cloud computing platform. The server may in some examples correspond to an application for asset sharing which may be installed on authorised UEs. The step 110 of receiving credentials from a sharing UE may comprise receiving a message such as a Short Message Service (SMS) message or an Internet Protocol (IP) message from the sharing UE. The peer to peer communication protocol may be Wi-Fi Direct, local Wi-Fi or Bluetooth, and the credentials may for example be the Service Set ID (SSID) and password or network key of the sharing UE. In some examples, the decryption key available to authorised UEs may be a decryption key that is stored in the asset sharing application which may be installed on authorised UEs.

The step 140 of facilitating distribution of the encrypted credentials to at least one other authorised UE may comprise sending the encrypted credentials to an authorised UE in a message. The authorised UE to which the encrypted credentials may be sent may be the at least one other authorised UE with which content is to be shared, or may be the sharing UE.

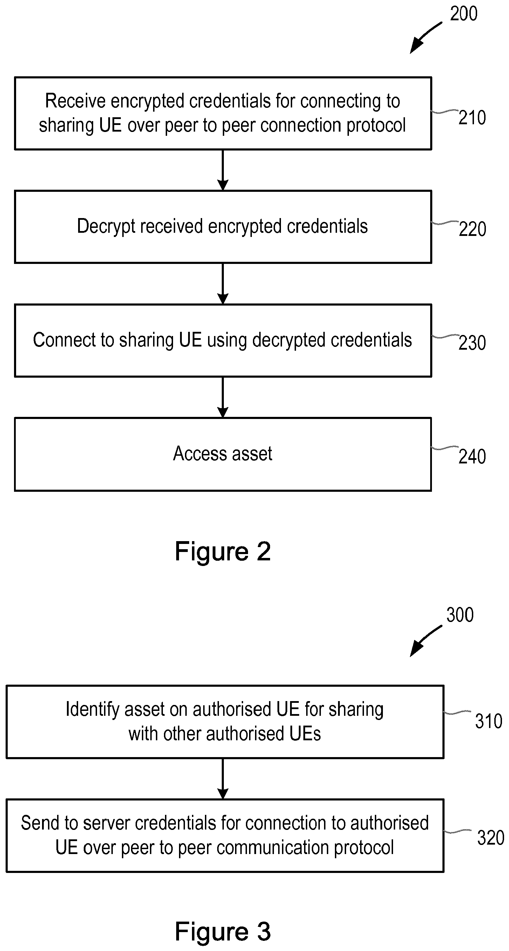

Figure 2 illustrates process steps in a method 200, performed in an authorised UE, for accessing an asset shared by another authorised UE, the asset comprising at least one of content or functionality on the sharing UE. In a first step 210, the method comprises receiving encrypted credentials for connecting to the sharing UE over a peer to peer connection protocol. The method then comprises, in step 220, decrypting the received encrypted credentials and, in step 230, connecting to the sharing UE using the decrypted credentials. In step 240, the method comprises accessing the asset.

As discussed above, an authorised UE may be a UE having an asset sharing application installed on the device, and the step 220 of decrypting the received credentials may be performed using a decryption key that is stored in the asset sharing application which may be installed on authorised UEs.

Figure 3 illustrates process steps in a method 300, performed in an authorised UE, for sharing an asset with another authorised UE, the asset comprising at least one of content or functionality on a sharing UE. In a first step 310, the method comprises identifying an asset on the authorised UE for sharing with other authorised UEs. The method then comprises, in a step 320, sending to a server credentials for connection to the authorised UE over a peer to peer communication protocol.

The server may for example be an application server. The step 320 of sending credentials may comprise sending a message such as an SMS message or an IP message from the sharing UE. As discussed above, the peer to peer communication protocol may be Wi-Fi Direct, local Wi-Fi or Bluetooth, and the credentials may for example be the Service Set ID (SSID) and password or network key of the sharing UE.

The step 310 of identifying an asset may comprise marking content for sharing, for example by placing content in a sharing folder or adding the content to a list within an asset sharing application. In further examples, the step 310 may comprise establishing that particular functionality is available on the authorised UE, for example establishing that Wireless Internet Connectivity is operational on the UE.

The methods 100, 200 and 300 may cooperate to enable sharing of assets between authorised UEs in a substantially automated manner, by securely distributing the credentials to access an asset on a sharing UE to other authorised UEs. The use of an encryption key corresponding to a decryption key available to authorised UEs ensures that the distributed credentials can only be accessed by authorised UEs. Only members of the community of users who are "authorised" may decrypt the distributed credentials and benefit from the shared asset. What constitutes an authorised UE may vary according to different examples of the invention. As discussed above, UE's may become authorised by installing an appropriate asset sharing application on the device. Alternatively, users may sign up to a sharing community or become authorised in other ways.

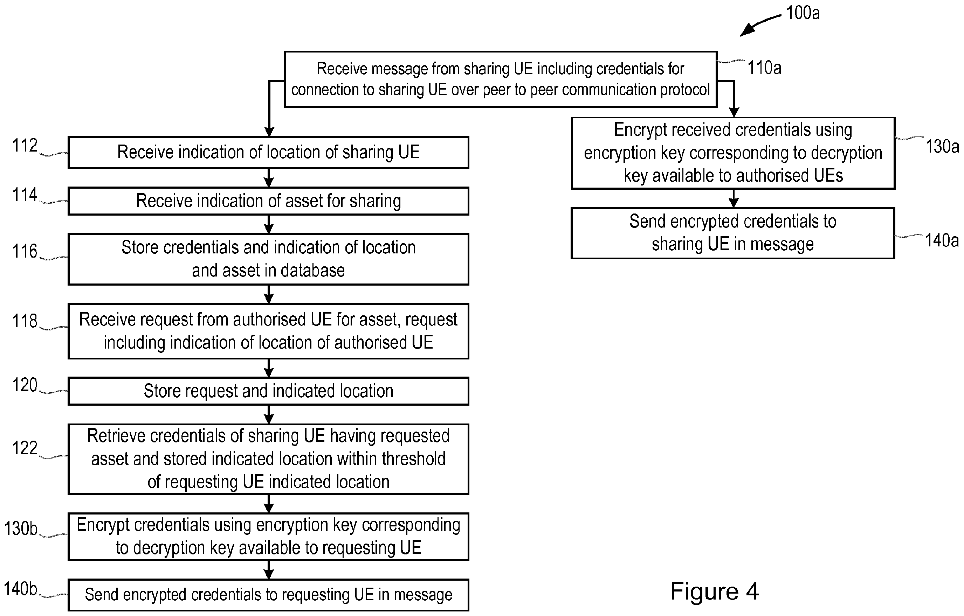

Figures 4 to 6 illustrate further examples of the methods 100, 200 and 300, showing examples of how the steps discussed above may be further refined and augmented to provide the above discussed and additional functionality.

Figure 4 illustrates an example method 100a, conducted in an asset sharing server. In a first step 110a, the server receives a message from a sharing UE, the message including credentials for connection to the sharing UE over a peer to peer communication protocol. As discussed above, the credentials may for example be the SSID and network key to enable connection to the sharing UE over Wi-Fi direct. The message may be an SMS message, for example in situations were limited bandwidth is available for communication over a cellular communication network. Alternatively, the message may be an IP message.

The server may take different actions on receiving the message with sharing UE credentials, according to different examples of the method 100a. In a first alternative, after receipt of the credentials in step 110a, the server proceeds to step 130a, and encrypts the received credentials using an encryption key corresponding to a decryption key available to authorised UEs. The server then sends the encrypted credentials to the sharing UE in a message at step 140a. The sharing UE may then itself send the encrypted credentials to a particular authorised UE with which it wishes to share an asset, or may broadcast the encrypted credentials to all neighbouring UEs. While all devices having appropriate capabilities will receive the broadcast, only authorised UEs will be able to decrypt the credentials and connect to the sharing UE.

In another alternative, on receipt of the credentials in step 110a, the server may also receive an indication of a location of the sharing UE in step 112, and may receive an indication of the asset for sharing in step 114. The indications of location and asset may be received in the same SMS or IP message as the credentials. The indication of location of the sharing UE may take different forms including GPS coordinates or an identification of a communication network cell within which the sharing UE is located. Alternatively, the indication of location may be received from communication network basestations neighbouring the sharing UE, which indications may enable triangulation of the sharing UE. In the case of an asset in the form of content, the indication of the asset may provide varying levels of detail permitting the identification of the asset for sharing. This may include for example the title and release date of a movie, or the title and artist of a song. In the case of functionality, the indication may simply identify the nature of the functionality, for example indicating that a Wi-Fi hotspot is available at the sharing UE. The server stores the credentials and indications of asset and location in a database in step 116.

In step 118, the server receives a request from an authorised UE for credentials to access an asset, the request including an indication of the required asset and an indication of a location of the requesting UE. The request and indicated location are also stored by the server in a database. The location and required asset of the requesting UE may be stored in a separate "requesting" part of the database, with assets and locations of sharing UEs stored in a "sharing" part of the database. In step 122, the server retrieves credentials of a sharing UE having the requested asset and a stored indicated location within a threshold of the indicated location of the requesting UE. The server may first identify all sharing UEs having the requested asset available for sharing, and then exclude all identified UEs outside a threshold distance from the requesting UE. The threshold may be defined according to the nature of the indication of location. For example, if the indication of location for both the sharing and requesting UEs is an indication of the communication network cell within which the UEs are located, the threshold may be defined as the same or neighbouring cells. If the indication is coordinates, or permits triangulation of the UE, the threshold may be a maximum radius of separation from the requesting UE. In some examples, the threshold may be defined by a network operator. In further examples, the threshold may be defined or adjusted by the server, as a function of the number of sharing UEs having the requested asset, or the location of the requesting UE. If the asset is popular, and many sharing UEs have the requested asset, then the threshold may be relatively small, that is a short threshold distance or only UEs within the same cell. Similarly, if the requesting UE is located in a highly populated urban area with many sharing UEs, the threshold may be relatively small. Alternatively, if the asset is relatively rare, or the requesting UE is in a sparsely populated area, the threshold may be larger, that is a large threshold distance or including first or second generation neighbour cells. The server may retain the credentials of one or more sharing UEs having the requested asset and being located within the threshold. The server may select from the retained credentials only the sharing UE having the requested asset that is closest to the requesting UE, or may select and rank retained sharing UE credentials according to various criteria, including for example distance from requiting UE, reliability, or a rating provided by users of authorised UEs.

In step 130b, the server encrypts the selected retrieved credentials using an encryption key corresponding to a decryption key available to the requesting UE. The server then sends the encrypted credentials to the requesting UE in a message in step 140b. In some example, the server may also send an indication of where the UE(s) corresponding to the encrypted credentials is/are located. In this manner, the requesting UE may be guided how to move into sufficiently close proximity to access the requested asset.

If the server cannot identify a sharing UE having the requested asset and within the threshold distance of the requesting UE, the server may retain the request in the database and check again for sharing UEs having the requested asset after a threshold time period.

The server may thus play a greater or lesser role in the sharing of an asset between authorised UEs. In some examples, the server may simply receive credentials from a sharing UE, encrypt the credentials and facilitate distribution of the encrypted credentials by returning the encrypted credentials to the sharing UE for broadcast or sending by the sharing UE. In other examples, the server may act as a central repository for information about assets available for sharing and the location and credentials of the sharing UEs. The server may identify appropriate sharing UEs for a requesting UE and forward the necessary credentials to the requesting UE.

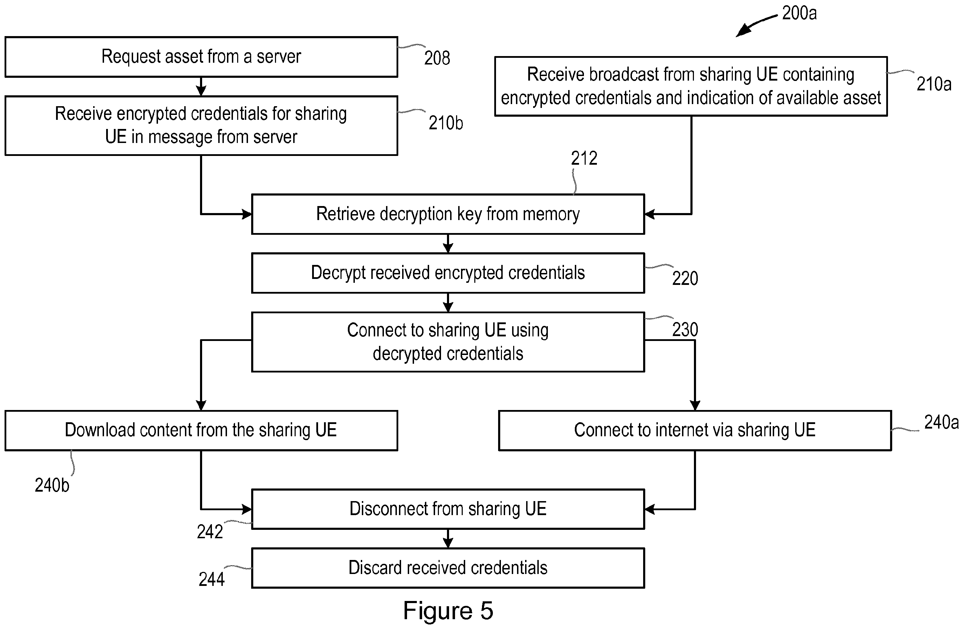

Figure 5 illustrates an example method 200a, conducted in a requesting authorised UE. As discussed above the method 200a may take place within an asset sharing application which may be installed on the requesting UE. As in the method 100a, the method 200a includes alternative actions, which may be conducted by the requesting UE according to different examples of the method 200a. In a first alternative, the requesting UE receives a broadcast from a sharing UE in step 210a, the broadcast containing encrypted credentials for connection to the sharing UE, and in some examples also including an indication of one or more assets available for sharing from the sharing UE. In another alternative, the requesting UE requests from a server in a step 208 credentials for accessing an asset. The request may be sent in the form of a message such as an SMS or IP message, which may include an indication of the requested asset and an indication of a location of the requesting UE. The message may be sent by an asset sharing application, for example prompted by the asset being placed into a wish list for assets, which wish list is stored in the asset sharing application. In step 210b, the requesting UE then receives from the server encrypted credentials for a sharing UE having the requested asset and being located within a threshold distance of the requesting UE. Having received the encrypted credentials in step 210a or 210b, the requesting UE then retrieves a decryption key from a memory in step 212. The decryption key may be stored in a memory associated with an asset sharing application. In step 220, the requesting UE decrypts the encrypted credentials and in step 230, the requesting UE connects to a sharing UE using the decrypted credentials. The requesting UE then accesses the shared asset, which may involve using functionality on the sharing UE or accessing content. In a first alternative, accessing the asset may for example comprise connecting to the Internet via the sharing UE in step 240a, using for example a Wi-Fi hotspot established by the sharing UE. In another alternative, accessing the asset may comprise downloading content from the sharing UE in step 240b. The requesting UE may then disconnect from the sharing UE in step 242 and discard the received credentials in step 244.

If the requesting UE fails to successfully connect to the sharing UE corresponding to the received credentials, the requesting UE may resend the request to the server.

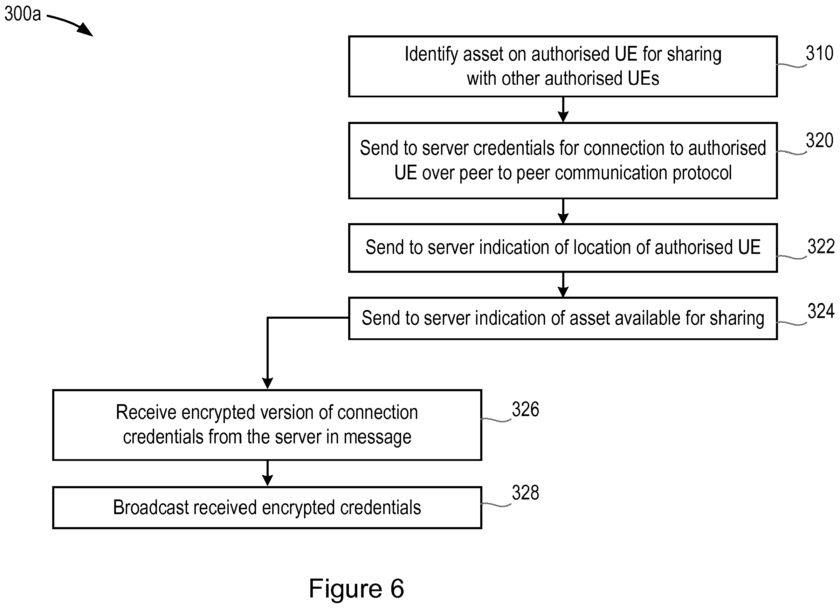

Figure 6 illustrates an example method 300a, conducted in a sharing authorised UE. As discussed above, the method 300a may take place within an asset sharing application which may be installed on the sharing UE. In a first step 310, the sharing UE identifies an asset on the sharing UE for sharing with other authorised UEs. This may comprise marking content for sharing, for example by placing content in a sharing folder or adding the content to a list within an asset sharing application. In further examples, the step 310 may comprise establishing that particular functionality is available on the authorised UE, for example establishing that Wireless Internet Connectivity is operational on the UE.

The sharing UE then sends to a server, such as an application server conducting the method 100, 100a, credentials for connection to the sharing UE over a per to peer communication protocol. These credentials may, as discussed earlier, be an SSID and network key for connection to the sharing UE over Wi-Fi direct. The sharing UE may also, in certain alternatives, send to the server an indication of its location in step 322 and an indication of the asset available for sharing in step 324. The indications of location and asset may be sent with the credentials, for example in an SMS or IP message. In some examples, the sharing UE may then receive from the server an encrypted version of its connection credentials in step 326, and broadcast the received encrypted credentials in step 328. The sharing UE may also broadcast an indication of an asset available for sharing at the UE. Authorised UEs wishing to access the asset available for sharing may receive the broadcast and decrypt the credentials in order to connect to the sharing UE. Alternatively authorised UEs may receive the encrypted credentials from the server, as discussed above.

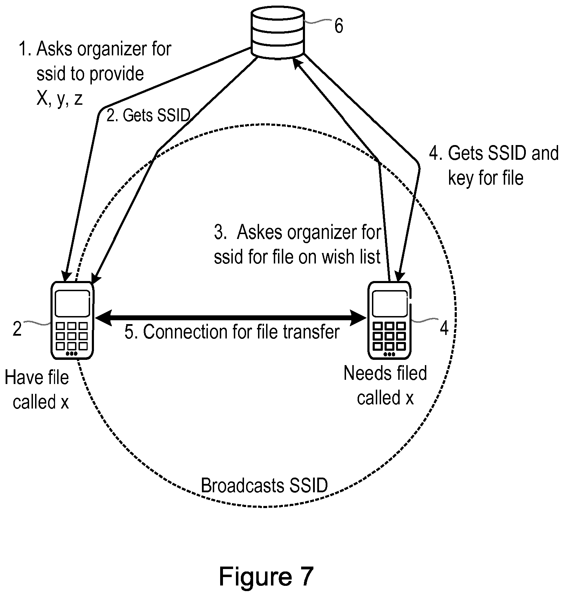

Figure 7 illustrates an example of the above described methods in operation to enable sharing of media content between two authorised UEs; a sharing UE 2 and a requesting UE 4, each of which communicate with a server 6. In the illustrated example, each of the UEs has installed an asset sharing application within which examples of the above discussed methods are running.

Referring to Figure 7, the sharing UE 2 has a range of content stored on the device, including a movie X, which the user of the sharing UE 2 is willing to share with other authorised UEs. The user of the sharing UE 2 identifies movie X for sharing, at step 1, for example by placing movie X into a sharing folder, or flagging movie X for sharing. This prompts the asset sharing application on the sharing UE 2 to send a message to the server 6, identifying the movie X as available for sharing and providing the SSID and network key to enable wireless connection to the sharing UE 2. The server 6 may send an acknowledgement accepting the SSID and network key in step 2, or may alternatively return the credentials to the sharing UE 2 in encrypted form for broadcast. If the sharing UE broadcasts its encrypted SSID and network key, this is received by the requesting UE 4, which retrieves a decryption key from the asset sharing application memory and decrypts the SSID and network key to enable connection to the sharing UE 2 and download of the movie X.

In an alternative example, if the server merely sends an acknowledgement to the sharing UE 2 at step 2, the requesting UE 4, which is seeking to obtain movie X, sends a request to the server 6, asking for movie X, in step 3. The message is sent by the asset sharing application on the requesting UE 4. Sending the message may be prompted for example by the user of requesting UE 4 adding movie X to a wish list of movies within the asset sharing application. At step 4, the server 6 responds with an encrypted SSID and network key for one or more sharing UEs, including the sharing UE 2, which have movie X available for sharing. As discussed above, the list of SSIDs and network keys may be limited to sharing UEs in close proximity to the requesting UE. The server may also send an indication of where the sharing UEs are, to enable the requesting UE to move within connection range of the or each sharing UE. The received SSID(s) and network key(s) are decrypted by the asset sharing application on the requesting UE 4, and in step 5, the requesting UE 4 connects to the sharing UE and downloads movie X. Once download is completed, the asset sharing application terminates the connection and discards the SSID(s) and network key(s).

In the event that the requesting UE 4 is unable to connect to a sharing UE, the asset sharing application may re-send the request for movie X, and may continue re-sending the request until the movie is successfully downloaded.

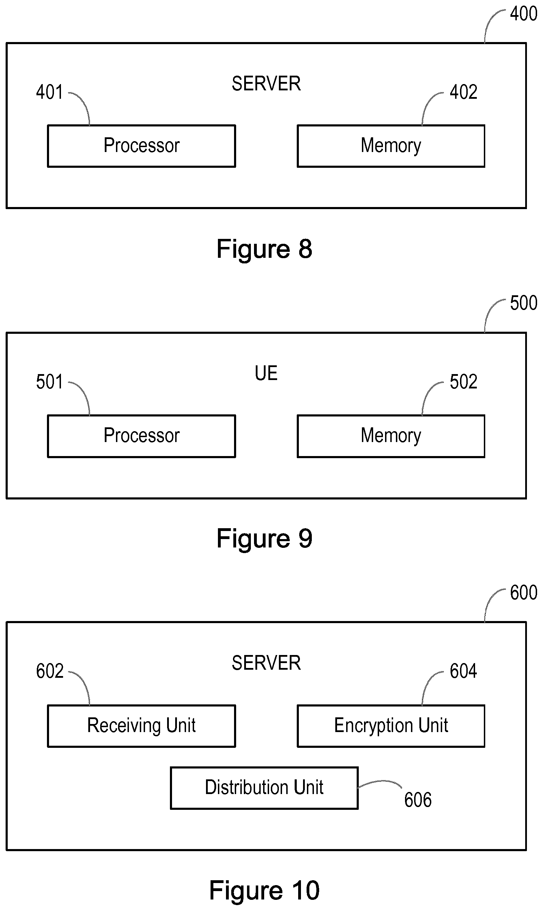

As discussed above, the methods of the present invention may be conducted in a UE and in a server. The methods may be conducted on receipt of suitable computer readable instructions, which may be embodied within a computer program running on the UE or server. Figures 8 and 9 illustrate first examples of a server and UE which may execute the methods of the present invention, for example on receipt of suitable instructions from a computer program. Referring to Figures 8 and 9, each of the server 400 and UE 500 comprises a processor 401, 501 and a memory 402, 502. The memory 402, 502 contains instructions executable by the processor 401, 501 such that the server 400 is operative to conduct the methods 100, 100a of Figures 1 and 4 and the UE 500 is operative to conduct the methods 200, 200a, 300, 300a of Figures 2, 3, 5 and 6.

Figure 10 illustrates functional units in another embodiment of server 600 which may execute the methods 100, 100a of the present invention, for example according to computer readable instructions received from a computer program. It will be understood that the units illustrated in Figure 10 are functional units, and may be realised in any appropriate combination of hardware and/or software. For example, the units may comprise one or more processors and one or more memories containing instructions executable by the one or more processors. The units may be integrated to any degree.

Referring to Figure 10, the server 600 comprises a receiving unit 602 for receiving, from the sharing UE, credentials for connection to the sharing UE over a peer to peer communication protocol. The server also comprises an encryption unit 604 for encrypting the received credentials using an encryption key corresponding to a decryption key available to authorised UEs. The server also comprises a distribution unit 606 for facilitating distribution of the encrypted credentials to at least one other authorised UE. In some examples of the server, the distribution unit may comprise a transmitting unit for sending the encrypted credentials to an authorised UE in a message. The transmitting unit may also be for sending the encrypted credentials to the at least one other authorised UE or to the sharing UE, and may also be for sending an acknowledgement of receipt of the credentials to the sharing UE.

The server 600 may also comprise a memory unit for storing the received credentials in a database. The receiving unit 602 may also be for receiving an indication of a location of the sharing UE and an indication of the asset to be shared, and the memory unit may also be for storing the indicated location and asset in the database with the credentials. The receiving unit may also be for receiving a request from an authorised UE for an asset, and the memory unit may also be for retrieving from the database the credentials of a sharing UE having the requested asset.

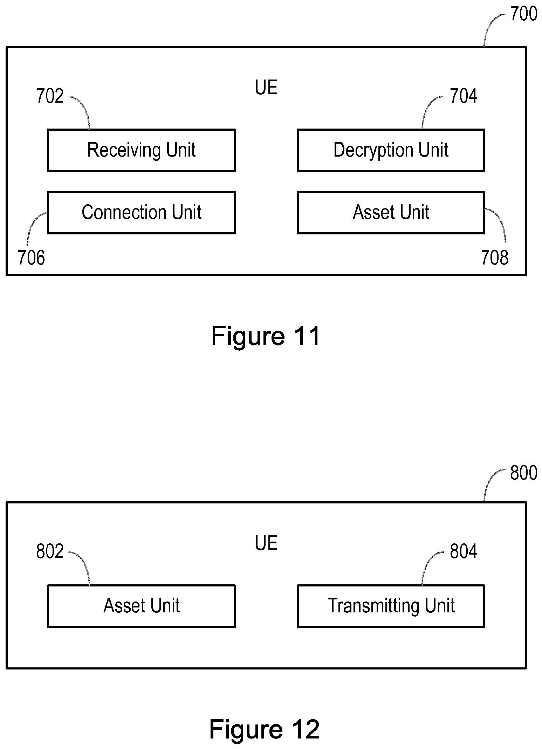

Figure 11 illustrates functional units in another embodiment of UE 700 which may execute the methods 200, 200a of the present invention, for example according to computer readable instructions received from a computer program. It will be understood that the units illustrated in Figure 11 are functional units, and may be realised in any appropriate combination of hardware and/or software. For example, the units may comprise one or more processors and one or more memories containing instructions executable by the one or more processors. The units may be integrated to any degree.

Referring to Figure 11, the UE 700 comprises a receiving unit 702 for receiving encrypted credentials for connecting to the sharing UE over a peer to peer connection protocol and a decryption unit 704 for decrypting the received encrypted credentials. The UE 700 also comprises a connection unit 706 for connecting to the sharing UE using the decrypted credentials and an asset unit 708 for accessing the asset. The decryption unit 704 may decrypt the received encrypted credentials by retrieving a decryption key from a memory. The connection unit 706 may also be for disconnecting from the sharing UE. The receiving unit 702 may be for receiving a broadcast from the sharing UE containing the encrypted credentials and may be for receiving a message from the server containing the encrypted credentials.

The UE 700 may further comprise a transmitting unit for requesting an asset from a server and for providing an indication of a location of the authorised UE to the server.

The asset unit 708 may be for downloading content from the sharing UE or for using functionality available at the sharing UE.

Figure 12 illustrates functional units in another embodiment of UE 800 which may execute the methods 300, 300a of the present invention, for example according to computer readable instructions received from a computer program. It will be understood that the units illustrated in Figure 12 are functional units, and may be realised in any appropriate combination of hardware and/or software. For example, the units may comprise one or more processors and one or more memories containing instructions executable by the one or more processors. The units may be integrated to any degree.

Referring to Figure 12, the UE 800 comprises an asset unit 802 for identifying an asset on the authorised UE for sharing with other authorised UEs, and a transmitting unit 804 for sending to a server credentials for connection to the authorised UE over a peer to peer communication protocol. The UE may also comprise a receiving unit for receiving an encrypted version of the connection credentials from the server in a message.

The transmitting unit may also be for broadcasting the received encrypted credentials. The transmitting unit may also be for sending an indication of a location of the authorised UE and of the asset to be shared to the server.

In some examples, the units of UE 700 and UE 800 described above may be combined in a single UE, which may be capable of performing methods 200 and 200a as well as methods 300, 300a. A single UE may thus be capable of acting both as a sharing UE and a requesting UE.

Aspects of the present invention thus provide methods enabling the sharing of assets between UEs. UEs having desired assets available for sharing may be identified, and sharing facilitated, thus widening the circle users between whom content or functionality may be shared. The process of locating and connecting to sharing UEs is carried out via the methods of the present invention, removing the need for users of UEs to know each other in order to share assets.

The methods of the present invention may be implemented in hardware, or as software modules running on one or more processors. The methods may also be carried out according to the instructions of a computer program, and the present invention also provides a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method at a server for enabling sharing of an asset by an authorised User Equipment device, UE, with other authorised UEs, the asset comprising at least one of content or functionality on a sharing UE, the method comprising:
receiving, at the server, an indication of a location of the sharing UE and credentials from the sharing UE, wherein the credentials are for connection to the sharing UE over a peer to peer communication protocol;
encrypting, at the server, the received credentials using an encryption key corresponding to a decryption key available to authorised UEs; and
facilitating distribution of the encrypted credentials from the server to at least one other authorised UE, wherein facilitating the distribution of the encrypted credentials comprises at least sending an indication of the location of the sharing UE to the at least one other authorised UE.

2. The method as claimed in claim 1, wherein an authorised UE comprises a UE having an asset sharing application installed on the UE.

3. The method as claimed in claim 1 or 2, wherein facilitating the distribution of the encrypted credentials to the at least one other authorised UE, further comprises sending the encrypted credentials to the authorised UE in a message.

4. The method as claimed in claim 3, wherein the message comprises one of a Short Message Service, SMS, message or an Internet Protocol, IP, message.

5. The method as claimed in claim 3 or 4, wherein sending the encrypted credentials in the message, further comprises sending the encrypted credentials to the at least one other authorised UE.

6. The method as claimed in claim 3 or 4, wherein sending the encrypted credentials in the message, further comprises sending the encrypted credentials to the sharing UE.

7. The method as claimed in any one of the preceding claims, further comprising storing the received credentials in a database.

8. The method as claimed in claim 7, further comprising storing the indicated location in the database with the credentials.

9. The method as claimed in any one of the preceding claims, further comprising receiving an indication of the asset to be shared.

10. The method as claimed in claim 9, when dependent on claim 7, further comprising storing the received indication of the asset with the credentials.

11. The method as claimed in any one of claims 7 to 10, further comprising:
receiving a request from an authorised UE for an asset;
retrieving from the database, the credentials of a sharing UE having the requested asset; and
sending encrypted retrieved credentials to the requesting UE in a message.

12. The method as claimed in claim 11, further comprising receiving an indication of a location of the requesting UE; wherein retrieving, from the database, the credentials of the sharing UE having the requested asset comprises retrieving, from the database, the credentials of the sharing UE having the requested asset and having a stored indicated location within a threshold distance of the indicated location of the requesting UE.

13. The method as claimed in claim 11 or 12, further comprising storing the requested asset with an identification of the requesting UE in a database.

14. The method as claimed in any one of the preceding claims, wherein the asset comprises functionality on the sharing UE, and wherein the functionality comprises connectivity with a communication network.

15. A server for enabling sharing of an asset by an authorised User Equipment device, UE, with other authorised UEs, the asset comprising at least one of content or functionality on a sharing UE, the server comprising:
a receiving unit for receiving, from the sharing UE, an indication of a location of the sharing UE and credentials for connection to the sharing UE over a peer to peer communication protocol;
an encryption unit for encrypting the received credentials using an encryption key corresponding to a decryption key available to authorised UEs; and
a distribution unit for facilitating distribution of the encrypted credentials from the server to at least one other authorised UE, wherein to facilitate the distribution of the encrypted credentials, the server at least sends an indication of the location of the sharing UE to the at least one other authorised UE.

## Patentansprüche

1. Verfahren an einem Server zur Ermöglichung der gemeinsamen Nutzung eines Assets durch eine autorisierte Benutzergeräteeinrichtung, UE, mit anderen autorisierten UEs, wobei das Asset mindestens eines von Inhalt oder Funktionalität auf einer gemeinsam nutzenden UE umfasst, wobei das Verfahren Folgendes umfasst:
Empfangen einer Angabe eines Standorts der gemeinsam nutzenden UE und Zugangsdaten von der gemeinsam nutzenden UE an dem Server, wobei die Zugangsdaten zur Verbindung mit der gemeinsam nutzenden UE über ein Peer-to-Peer-Kommunikationsprotokoll dienen;
Verschlüsseln der empfangenen Zugangsdaten an dem Server unter Verwendung eines Verschlüsselungsschlüssels, der einem Verschlüsselungsschlüssel entspricht, der autorisierten UEs zur Verfügung steht; und
Erleichtern der Verteilung der verschlüsselten Zugangsdaten von dem Server an mindestens eine andere autorisierte UE, wobei Erleichtern der Verteilung der verschlüsselten Zugangsdaten mindestens Senden einer Angabe des Standorts der gemeinsam nutzenden UE an die mindestens eine andere autorisierte UE umfasst.

2. Verfahren nach Anspruch 1, wobei eine autorisierte UE eine UE umfasst, die eine Anwendung zur gemeinsamen Nutzung von Assets aufweist, die auf der UE installiert ist.

3. Verfahren nach Anspruch 1 oder 2, wobei Erleichtern der Verteilung der verschlüsselten Zugangsdaten an die mindestens eine andere autorisierte UE ferner Senden der verschlüsselten Zugangsdaten an die autorisierte UE in einer Nachricht umfasst.

4. Verfahren nach Anspruch 3, wobei die Nachricht eine von einer Nachricht über einen Kurznachrichtendienst, SMS, oder einer Nachricht über ein Internetprotokoll, IP, umfasst.

5. Verfahren nach Anspruch 3 oder 4, wobei Senden der verschlüsselten Zugangsdaten in der Nachricht ferner Senden der verschlüsselten Zugangsdaten an die mindestens eine andere autorisierte UE umfasst.

6. Verfahren nach Anspruch 3 oder 4, wobei Senden der verschlüsselten Zugangsdaten in der Nachricht ferner Senden der verschlüsselten Zugangsdaten an die gemeinsam nutzende UE umfasst.

7. Verfahren nach einem der vorhergehenden Ansprüche, ferner umfassend Speichern der empfangenen Zugangsdaten in einer Datenbank.

8. Verfahren nach Anspruch 7, ferner umfassend Speichern des angegebenen Standorts in der Datenbank mit den Zugangsdaten.

9. Verfahren nach einem der vorhergehenden Ansprüche, ferner umfassend Empfangen einer Angabe des gemeinsam zu nutzenden Assets.

10. Verfahren nach Anspruch 9, wenn abhängig von Anspruch 7, ferner umfassend Speichern der empfangenen Angabe des Assets mit den Zugangsdaten.

11. Verfahren nach einem der Ansprüche 7 bis 10, ferner umfassend:
Empfangen einer Anforderung eines Assets von einer autorisierten UE;
Abrufen der Zugangsdaten einer gemeinsam nutzenden UE, die das angeforderte Asset aufweist, aus der Datenbank; und
Senden von verschlüsselten abgerufenen Zugangsdaten an die anfordernde UE in einer Nachricht.

12. Verfahren nach Anspruch 11, ferner umfassend Empfangen einer Angabe eines Standorts der anfordernden UE; wobei Abrufen der Zugangsdaten der gemeinsam nutzenden UE, die das angeforderte Asset aufweist, aus der Datenbank Abrufen der Zugangsdaten der gemeinsam nutzenden UE, die das angeforderte Asset aufweist und einen gespeicherten angegebenen Standort innerhalb eines Schwellenabstands von dem angegebenen Standort der anfordernden UE aufweist, aus der Datenbank umfasst.

13. Verfahren nach Anspruch 11 oder 12, ferner umfassend Speichern des angeforderten Assets mit einer Kennzeichnung der anfordernden UE in einer Datenbank.

14. Verfahren nach einem der vorhergehenden Ansprüche, wobei das Asset Funktionalität auf der gemeinsam nutzenden UE umfasst und wobei die Funktionalität Konnektivität mit einem Kommunikationsnetz umfasst.

15. Server zur Ermöglichung der gemeinsamen Nutzung eines Assets durch eine autorisierte Benutzergeräteeinrichtung, UE, mit anderen autorisierten UEs, wobei das Asset mindestens eines von Inhalt oder Funktionalität auf einer gemeinsam nutzenden UE umfasst, wobei der Server Folgendes umfasst:
eine Empfangseinheit zum Empfangen einer Angabe eines Standorts der gemeinsam nutzenden UE und Zugangsdaten zur Verbindung mit der gemeinsam nutzenden UE über ein Peer-to-Peer-Kommunikationsprotokoll von der gemeinsam nutzenden UE;
eine Verschlüsselungseinheit zum Verschlüsseln der empfangenen Zugangsdaten unter Verwendung eines Verschlüsselungsschlüssels, der einem Verschlüsselungsschlüssel entspricht, der autorisierten UEs zur Verfügung steht; und
eine Verteilungseinheit zum Erleichtern der Verteilung der verschlüsselten Zugangsdaten von dem Server an mindestens eine andere autorisierte UE, wobei der Server zum Erleichtern der Verteilung der verschlüsselten Zugangsdaten mindestens eine Angabe des Standorts der gemeinsam nutzenden UE an die mindestens eine andere autorisierte UE sendet.

## Revendications

1. Procédé au niveau d'un serveur pour permettre le partage d'un actif par un dispositif d'équipement utilisateur autorisé, UE, avec d'autres UE autorisés, l'actif comprenant au moins l'un parmi un contenu ou une fonctionnalité sur un UE de partage, le procédé comprenant :
la réception, au niveau du serveur, d'une indication d'un emplacement de l'UE de partage et d'informations d'identification de l'UE de partage, dans lequel les informations d'identification sont destinées à une connexion à l'UE de partage par l'intermédiaire d'un protocole de communication poste à poste ;
le chiffrement, au niveau du serveur, des informations d'identification reçues à l'aide d'une clé de chiffrement correspondant à une clé de déchiffrement disponible pour les UE autorisés ; et
le fait de faciliter la distribution des informations d'identification chiffrées du serveur à au moins un autre UE autorisé, dans lequel le fait de faciliter la distribution des informations d'identification chiffrées comprend au moins l'envoi d'une indication de l'emplacement de l'UE de partage à l'au moins un autre UE autorisé.

2. Procédé selon la revendication 1, dans lequel un UE autorisé comprend un UE ayant une application de partage d'actif installée sur l'UE.

3. Procédé selon la revendication 1 ou 2, dans lequel le fait de faciliter la distribution des informations d'identification chiffrées à l'au moins un autre UE autorisé comprend en outre l'envoi des informations d'identification chiffrées à l'UE autorisé dans un message.

4. Procédé selon la revendication 3, dans lequel le message comprend l'un d'un service de messages courts, SMS, ou d'un message de protocole Internet, IP.

5. Procédé selon la revendication 3 ou 4, dans lequel l'envoi des informations d'identification chiffrées dans le message comprend en outre l'envoi des informations d'identification chiffrées à l'au moins un autre UE autorisé.

6. Procédé selon la revendication 3 ou 4, dans lequel l'envoi des informations d'identification chiffrées dans le message comprend en outre l'envoi des informations d'identification chiffrées à l'UE de partage.

7. Procédé selon l'une quelconque des revendications précédentes, comprenant en outre le stockage des informations d'identification reçues dans une base de données.

8. Procédé selon la revendication 7, comprenant en outre le stockage de l'emplacement indiqué dans la base de données avec les informations d'identification.

9. Procédé selon l'une quelconque des revendications précédentes, comprenant en outre la réception d'une indication de l'actif à partager.

10. Procédé selon la revendication 9, lorsqu'elle dépend de la revendication 7, comprenant en outre le stockage de l'indication reçue de l'actif avec les informations d'identification.

11. Procédé selon l'une quelconque des revendications 7 à 10, comprenant en outre :
la réception d'une demande d'un UE autorisé pour un actif ;
la récupération à partir de la base de données, des informations d'identification d'un UE de partage ayant l'actif demandé ; et
l'envoi d'informations d'identification récupérées chiffrées à l'UE demandeur dans un message.

12. Procédé selon la revendication 11, comprenant en outre la réception d'une indication d'un emplacement de l'UE demandeur ; dans lequel la récupération, à partir de la base de données, des informations d'identification de l'UE de partage ayant l'actif demandé comprend la récupération, à partir de la base de données, des informations d'identification de l'UE de partage ayant l'actif demandé et ayant un emplacement indiqué stocké à une distance seuil de l'emplacement indiqué de l'UE demandeur.

13. Procédé selon la revendication 11 ou 12, comprenant en outre le stockage de l'actif demandé avec une identification de l'UE demandeur dans une base de données.

14. Procédé selon l'une quelconque des revendications précédentes, dans lequel l'actif comprend une fonctionnalité sur l'UE de partage, et dans lequel la fonctionnalité comprend une connectivité avec un réseau de communication.

15. Serveur pour permettre le partage d'un actif par un dispositif d'équipement utilisateur autorisé, UE, avec d'autres UE autorisés, l'actif comprenant au moins l'un parmi un contenu ou une fonctionnalité sur un UE de partage, le serveur comprenant :
une unité de réception pour recevoir, à partir de l'UE de partage, une indication d'un emplacement de l'UE de partage et des informations d'identification pour la connexion à l'UE de partage par l'intermédiaire d'un protocole de communication poste à poste ;
une unité de chiffrement pour chiffrer les informations d'identification reçues à l'aide d'une clé de chiffrement correspondant à une clé de déchiffrement disponible pour les UE autorisés ; et
une unité de distribution pour faciliter la distribution des informations d'identification chiffrées du serveur à au moins un autre UE autorisé, dans lequel pour faciliter la distribution des informations d'identification chiffrées, le serveur envoie au moins une indication de l'emplacement de l'UE de partage à l'au moins un autre UE autorisé.
